(19) Europäisches Patentamt / European Patent Office / Office européen des brevets

(11) **EP 2 372 564 B1**

(12) **FASCICULE DE BREVET EUROPEEN**

(45) Date de publication et mention
de la délivrance du brevet:
**19.12.2012 Bulletin 2012/51**

(51) Int Cl.:
***G06F 13/40*** *(2006.01)*

(21) Numéro de dépôt: **10305279.1**

(22) Date de dépôt: **22.03.2010**

(54) **Dispositif de connexion à un bus de type EIB ou KNX TP de modules d'entrée/sortie.**

Verbindungsvorrichtung an einen EIB- oder KNX-TP-Bus von Eingangs-/Ausgangsmodulen

Device for connecting input/output modules to an EIB or KNX TP bus.

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(43) Date de publication de la demande:
**05.10.2011 Bulletin 2011/40**

(73) Titulaire: **HAGER CONTROLS**
**67700 Saverne (FR)**

(72) Inventeur: **Paillard Jean-Noël**
**67120 Dachstein (FR)**

(74) Mandataire: **Littolff, Denis**
**Meyer & Partenaires**
**Brevets**
**20 place des Halles**
**Bureau Europe**
**67000 Strasbourg (FR)**

(56) Documents cités:
**DE-A1-102006 011 595**

• **RIS H R: "EIB - UN SYSTEME DE BUS UNIFIE
POUR INSTALLATIONS ELECTRIQUES"
BULLETIN SEV/VSE, SCHWEIZERISCHER
ELEKTROTECHNISCHER VEREIN, ZURICH, CH,
vol. 87, no. 7, 29 mars 1996 (1996-03-29), pages
31-38, XP000612698 ISSN: 0036-1321**

EP 2 372 564 B1

**Description**

La présente invention a trait à un dispositif de connexion à un bus de type EIB ou KNX TP de modules d'entrée/sortie gérant des signaux en provenance ou à destination de périphériques domotiques. Il s'agit en d'autres termes de la gestion de points de connexion de modules à ce bus. Celui-ci est un standard connu en soi, créé par des constructeurs européens du domaine de l'énergie et des techniques du bâtiment.

Schématiquement, un tel bus est constitué de deux fils polarisés par une tension comprise entre 20 et 30 volts. Un certain nombre de modules réalisant une fonction dans le domaine de la domotique ou de l'immotique sont ensuite connectés à ce bus, en vue de communiquer entre eux et/ou de s'y alimenter en énergie.

Les applications sont multiples et très nombreuses, et concernent par exemple mais non limitativement le contrôle de l'éclairage, la commande de stores, les systèmes de sécurité, la ventilation, le chauffage, la climatisation, la surveillance, les systèmes d'alarme, de contrôle de l'eau, la gestion de l'énergie, la mesure et le contrôle des appareils électroménagers, des équipements audio ou vidéo, etc.

Les modules connectés sont par conséquent des modules d'entrée ou de sortie de données mis en oeuvre dans le cadre des applications précitées. Un dispositif de connexion de tels modules d'entrée/sortie à un bus comporte classiquement une interface constituée d'un étage de protection directement connecté au bus, en général au moins une alimentation adaptant l'énergie disponible sur le bus pour les besoins spécifiques du module, un étage récepteur recevant les signaux en provenance du bus pour le fonctionnement du module, et un étage émetteur émettant des signaux en provenance du module vers le bus.

Chaque module d'entrée/sortie connecté au bus en tire en principe le courant nécessaire à son fonctionnement, une ou plusieurs alimentations également connectées au bus (selon la longueur de ce dernier, le nombre de points de connexion et la nature des modules) permettant en principe de fournir l'énergie nécessaire à chaque module.

La tendance actuelle, compte tenu du succès grandissant, dans le domaine de la domotique, des architectures basées sur de tels bus, va dans le sens d'un accroissement des besoins en énergie des modules. Au point que certains d'entre eux peuvent comporter une alimentation spécifique.

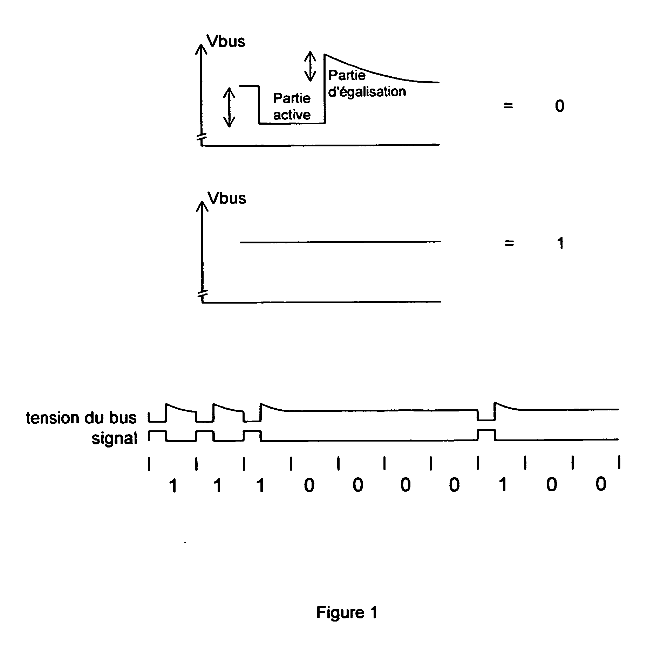

Le codage des informations sur le bus s'effectue à l'aide d'un signal présentant une forme d'onde comportant une première phase d'allure crénelée et une seconde phase démarrant par un pic de tension, correspondant à un niveau 0, l'absence de forme d'onde correspondant à un niveau 1. C'est ce qui est représenté en figure 1.

La forme très particulière de ce signal résulte initialement d'une volonté de répartir les énergies, mais elle a des incidences sur la gestion par les modules des signaux véhiculés par le bus.

A titre principal, et cela résulte de l'évidence, la forme du signal ne doit bien entendu pas être déformée lors des transmissions, afin que les modules d'entrée et sortie puissent lire le cas échéant les signaux qui leur sont adressés. Pour empêcher cette déformation, en phase active, c'est à dire lors de l'émission d'un « 0 », les modules doivent comporter une impédance dynamique la plus élevée possible.

Or, on a fait état des consommations de plus en plus élevées que requièrent les modules, qui ont tendance à tirer un courant de plus en plus important. Ceci doit bien entendu pouvoir se faire sans impacter de manière sensible ladite impédance dynamique.

L'objectif poursuivi est double : ne pas dégrader le rendement, qui doit rester élevé lorsqu'il ne se passe rien sur le bus, impliquant une impédance statique des modules faible, et ne pas déformer les signaux qui circulent sur le bus, impliquant une impédance dynamique élevée pour lesdit modules.

Dans le standard mentionné, le bus est soumis à une tension comprise entre 20 et 30 volts, et il alimente en courant au niveau des points de connexion les modules par des unités de consommation fixées à 10 mA. Or, les modules, pour pouvoir faire fonctionner les composants qui les constituent, peuvent comporter individuellement des alimentations internes délivrant une tension qui est ramenée aux alentours de 3 volts, et ils nécessitent de plus en plus souvent des courants bien supérieurs à 10 mA.

Actuellement, dans nombre de solutions existantes réalisant l'interfaçage entre le bus et les modules, il y a linéarité entre ce qui est consommé dans le module et ce qui est appelé sur le bus, en termes de consommation de courant. Une telle solution n'est pas judicieuse dans une configuration dans laquelle le nombre de modules augmente, comme c'est la tendance actuelle dans les réseaux domotiques. Elle conduit en effet à une augmentation importante de la consommation qui aboutit à l'effet contraire à celui qui est recherché ou qui reflète la tendance : il faut soit renoncer à multiplier les modules sur le réseau, soit mettre en place des solutions contraignantes en termes d'alimentation. Un tel constat est d'ailleurs également vrai en statique, s'agissant de la consommation des modules hors utilisation.

En somme, les solutions linéaires ne proposent qu'un rendement relativement faible, également parce que l'adaptation d'impédance ne tient pas correctement compte de la forme des signaux sur le bus.

L'un des objectifs principaux de cette invention est de proposer une configuration à haut rendement, capable au niveau de chaque point de connexion de garder une impédance dynamique correcte pour ne pas perturber les communications sur le bus, et permettant de tirer de celui-ci un courant adapté à toutes les configurations de modules sans impacter de manière trop sensible l'impédance statique, à des fins de réduction globale de la consommation.

En statique (en l'absence de communication ou durant l'émission d'un « 1 »), l'idée est d'optimiser le dispositif de connexion selon l'invention, de telle sorte que la consommation sur le bus soit la plus réduite possible, notamment le courant de polarisation.

A ces effets, le dispositif de connexion à un bus de type EIB ou KNX TP de modules d'entrée/sortie selon l'invention se caractérise à titre principal en ce qu'il comporte, en parallèle et en aval de l'étage de protection

- un étage d'adaptation d'impédance dynamique apte à générer une impédance dynamique élevée, connecté à une alimentation à rendement élevé générant une tension de sortie prédéterminée ;
- un étage émetteur ;
- un étage récepteur ;
- un étage de contrôle de la tension de bus ;

ces étages étant reliés à un microcontrôleur de gestion des signaux du module.

Cette architecture, qui respecte la sécurisation du bus, et rend donc tout contact avec ce dernier sans danger, est particulièrement original dans l'existence et la conception de l'étage d'adaptation d'impédance dynamique connecté à une alimentation à rendement élevé.

Plus précisément, l'étage d'adaptation d'impédance dynamique est basé sur une inductance électronique, constituée d'un circuit équivalent comportant une résistance en série avec une capacité, raccordés en parallèle à un transistor bipolaire de type NPN en série avec une résistance connectée à l'émetteur et dont la base est connectée entre la résistance et la capacité.

Cette inductance électronique ou self s'oppose à la variation du courant et ne perturbe pas les communications sur le bus. L'idée est de consommer un courant relativement constant malgré les variations de tension bus qui sont liées à la forme d'onde, c'est-à-dire aux bits émis pendant les phases de communication.

Selon une configuration possible, un transistor NPN limiteur de courant est interposé entre la base du transistor du circuit équivalent formant l'inductance électronique et la sortie de ce circuit, dont l'émetteur est raccordée en sortie de ce dernier et la base est connectée entre ledit transistor de l'inductance électronique et sa résistance d'émetteur.

Le but est de faire chuter la consommation de courant à l'entrée de l'inductance électronique lors d'un front montant de la tension bus ou de limiter le courant maximum instantané consommé sur le bus, notamment utile lors de la connexion d'un produit sur le bus. Dans cette hypothèse, la charge initiale de ses capacités internes, impliquant un appel de courant sur le bus, ne doit pas donner lieu à une forme d'onde pouvant être interprétée comme un signal d'émission. Le courant appelé doit alors être limité, et la charge s'effectue à courant constant.

Un interrupteur électronique est monté en aval de ladite inductance électronique, constitué d'un transistor bipolaire de type PNP dont l'émetteur est connecté à la sortie du circuit équivalent à l'inductance électronique, et dont le collecteur est raccordé à la masse, et qui est polarisé par une résistance et une capacité respectivement raccordés en sortie et en entrée dudit circuit équivalent.

Un étage redresseur est disposé en parallèle avec le transistor de l'interrupteur électronique, constitué d'une diode en série avec un condensateur polarisé dont la borne positive constitue la tension de sortie de l'étage d'adaptation d'impédance dynamique.

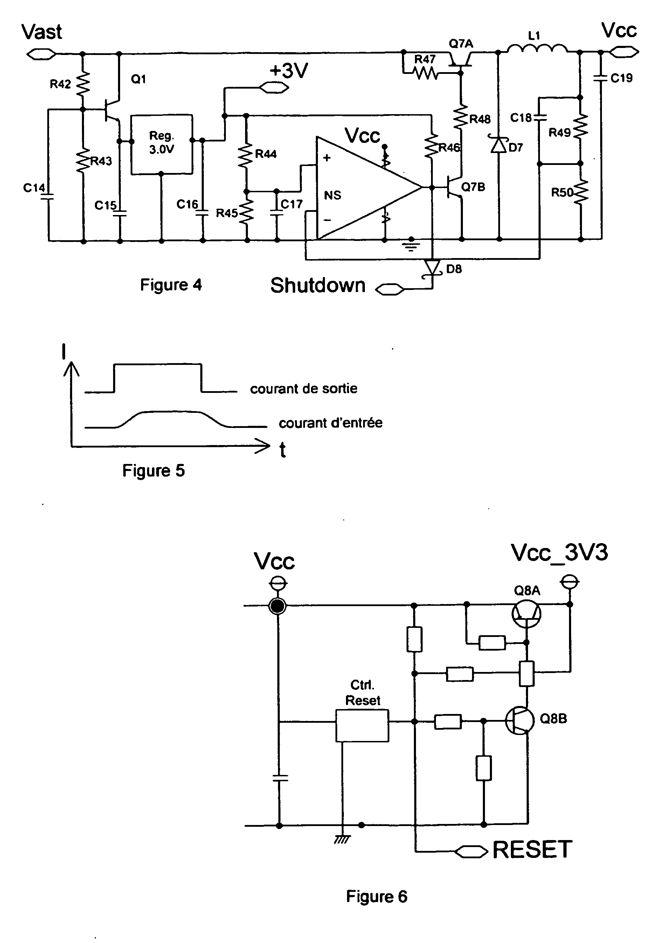

Ce condensateur a pour rôle de limiter les appels de courants sur le bus dans le même but que ci-dessus : éviter qu'un appel de courant sur le 3.3V, c'est à dire à l'intérieur du module pour l'application qu'il met en oeuvre, ne soit vu comme une volonté d'émettre sur le bus, la transmission d'information se faisant alors par dérive de courant. En d'autres termes, un front de courant important sur le 3.3V est transformé et lissé en appel moins abrupt sur le bus, avec une forme de signal en amont de type primitive des variations brutales apparaissant en aval. C'est ce qui apparaît en figure 5.

Dans ce cas, l'interrupteur constitué du transistor PNP a pour fonction d'assurer la continuité du courant lorsque la diode de l'étage de redressement ne conduit pas afin de conserver une impédance la plus constante possible.

Selon une possibilité, la base du transistor du circuit équivalent à une inductance est connectée au collecteur d'un transistor bipolaire de type NPN polarisé entre l'entrée du circuit et la masse via une capacité et un pont de résistances entre lesquelles est connectée la base dudit transistor, en vue de le rendre passant de manière transitoire lors d'un front montant de la tension d'entrée de l'étage d'adaptation d'impédance dynamique pour ne pas s'opposer à ce front montant par augmentation de l'impédance dans un but de réduction de la consommation temporaire.

En sortie de l'étage d'adaptation d'impédance qui vient d'être décrit, se trouve une alimentation à haut rendement. Cette dernière est basée sur un convertisseur Buck à hacheur constitué d'un transistor bipolaire PNP dont la base est commandé par le collecteur d'un transistor bipolaire NPN dont la base est polarisée par un régulateur de la tension d'entrée et commandée par un comparateur connecté d'une part à la tension d'entrée de l'alimentation via ledit régulateur et d'autre part en rétroaction à une fraction de sa tension de sortie via un pont diviseur dont les résistances fixent ladite tension de sortie.

Il s'agit d'une solution possible d'alimentation, laquelle pourrait cependant être réalisée totalement différemment sans aucun impact sur le reste de l'invention.

Classiquement, pour ce type de montage, le hacheur est donc commandé par un composant de comparaison dont le seuil est fixé en référence au dit montage et à la tension de sortie.

Selon une possibilité, la base dudit transistor PNP est reliée à l'entrée de l'alimentation via une résistance apte à assurer un blocage du transistor PNP lorsque le transistor NPN de commande est bloqué.

Cette résistance, qui fait chuter la tension d'entrée vers la base du transistor hacheur, est choisie pour que le blocage en question soit fiable. Par ailleurs, elle assure un meilleur rendement, car la courbe du courant est plus raide en descente.

De préférence, le comparateur est alimenté par la tension de sortie de l'alimentation, c'est-à-dire par la tension de sortie de cet étage assurant une alimentation à rendement élevé. Come on le verra plus en détail dans la suite, cette disposition permet d'améliorer le rendement du circuit en diminuant la consommation en statique.

On a mentionné le régulateur disposé en amont du montage Buck, dans l'alimentation : un montage ballast à transistor bipolaire NPN polarisé par un pont de résistance est interposé entre l'entrée de l'alimentation et le régulateur. Ce montage permet de limiter la tension d'entrée du régulateur mais n'est pas nécessaire si l'entrée du régulateur est capable de tenir la tension en question.

Le montage décrit auparavant, constituant une alimentation à haut rendement est, dans le dispositif de connexion de l'invention, suivi d'un étage de commutation commutant la tension continue prédéterminée générée par l'alimentation.

Celui-ci comporte un composant de contrôle de la réinitialisation d'un microcontrôleur, alimenté en sortie de l'alimentation et dont la sortie de réinitialisation commande un hacheur via la base d'un transistor bipolaire NPN en collecteur ouvert raccordé à un transistor PNP, ladite base étant connectée via un pont de résistance à l'émetteur du transistor PNP en sortie de l'étage de commutation.

Ce montage permet non seulement de contrôler de manière précise le voltage en sortie, mais également de commuter de manière franche la tension disponible en sortie de l'étage précédent, à l'aide du commutateur à double transistor.

Le dispositif de connexion de l'invention comporte, en aval de l'étage de protection, en parallèle avec l'étage d'adaptation d'impédance suivi de l'alimentation dont il a été fait état auparavant, un étage de contrôle de la tension de bus. Celui-ci comporte des moyens de contrôle de la tension du bus générant à destination d'un microcontrôleur un signal de sortie binaire indiquant si ladite tension est inférieure à un seuil prédéterminé.

Par ailleurs, de manière tout à fait similaire, un étage de contrôle de la tension est connecté en sortie de l'étage d'adaptation d'impédance dynamique, émettant un signal binaire à l'adresse de l'alimentation à rendement élevé en vue de la couper lorsque la tension en sortie de l'étage d'adaptation d'impédance dynamique est trop faible ou de ne démarrer l'alimentation qu'une fois le condensateur de stockage suffisamment chargé. Le but est alors d'éviter un phénomène dit de « pompage » susceptible de survenir lors du démarrage de l'alimentation à découpage, lorsque se produit un appel de courant ayant pour effet de faire chuter la tension aux bornes du condensateur. Si cette tension n'est pas suffisante, le pic de courant au démarrage a pour conséquence de la faire repasser en dessous du seuil et l'alimentation se coupe, puis la tension remonte, l'alimentation redémarre et ainsi de suite.

Ces étages de contrôle de la tension du bus ou de la tension de sortie de l'étage d'adaptation d'impédance dynamique comportent en entrée un transistor bipolaire de type PNP dont la base est raccordée à ladite tension qui le polarise via un pont de résistance, et dont l'émetteur commande la base d'un transistor de type NPN polarisée par une résistance, le signal binaire étant prélevé au niveau du collecteur de ce dernier relié à une tension continue prédéterminée via une résistance fixant le niveau de tension du signal à l'état haut.

De la sorte, un signal binaire peut être envoyé au microcontrôleur selon l'état des tensions contrôlées.

Un second transistor identique au transistor d'entrée est monté avec ce dernier en montage différentiel pour établir une compensation en température des tensions base/émetteur desdits transistors.

Il est à noter qu'un pont de résistance connecté entre la tension continue prédéterminée et la masse alimente la base des seconds transistors formant le montage différentiel des deux étages respectivement de contrôle de la tension du bus et de la tension en sortie de l'étage d'adaptation d'impédance dynamique, en vue de constituer un référentiel de tension.

Le montage de l'invention prévoit également un signal de coupure imminente de la tension raccordé via une résistance à la tension continue prédéterminée apparaissant en sortie de l'étage de commutation, et connecté à un microcontrôleur.

Dans le dispositif de connexion de l'invention, un étage de génération d'un signal d'interruption non masquable à destination du microcontrôleur est placé en sortie de l'étage de réception. Ce signal est nécessaire au microcontrôleur pour lire le signal de réception dans un délai très court.

Les signaux binaires émis par l'étage de réception et l'étage de génération d'un signal d'interruption non masquable sont inversés, avec un léger retard pour le second.

Plus précisément, cet étage de génération d'un signal d'interruption non masquable est constitué en entrée d'un transistor bipolaire de type NPN dont la base est connectée à la sortie de l'étage de réception, et dont l'émetteur commande via un pont de résistance la base d'un second transistor NPN dont le collecteur constitue la sortie générant le signal binaire d'interruption non masquable.

Une capacité est connectée en parallèle avec la résistance placée entre respectivement l'émetteur et la base de chacun des deux transistors bipolaires. Cette capacité aide à la commutation du transistor de sortie.

Par ailleurs, une capacité découple la sortie.

Selon une possibilité, l'étage récepteur est basé sur un amplificateur opérationnel utilisé en comparateur, fonctionnant en collecteur ouvert avec une résistance raccordée entre la sortie de l'amplificateur et à la tension de l'alimentation à haut rendement, dont l'entrée non inverseuse est connectée à ladite tension de l'alimentation via un premier pont diviseur et l'entrée inverseuse est raccordée à la tension de bus VIN via un second pont diviseur et un filtre passe-bas. Une capacité constituant une masse dynamique est connectée d'une part en aval du second pont diviseur et entre deux résistances formant l'une des branches du premier pont diviseur et d'autre part à la masse, la résistance de ladite branche connectée à l'entrée non inverseuse définissant d'une part le seuil de détection et d'autre part, avec une résistance de contreréaction connectée entre la sortie de l'amplificateur opérationnel et ladite entrée non inverseuse, l'hystérésis par leur rapport.

Le filtre passe-bas peut être constitué d'une capacité connectée entre les résistances du second pont diviseur et la masse. Il s'agit alors d'un filtre du premier ordre, dont on verra dans la suite qu'il n'assure pas l'immunité aux émissions conduites dans certaines bandes de fréquence.

On peut alors alternativement utiliser un filtre actif constitué d'un circuit obéissant à une structure de Sallen Key connecté en aval du pont second pont diviseur, et comportant un transistor suiveur. Cette solution est sensiblement plus performante.

L'invention va à présent être décrite plus en détail, en référence aux figures annexées, pour lesquelles :

- la figure 1 montre la forme des signaux et le codage correspondant ;
- la figure 2 est un schéma synoptique du dispositif de connexion selon l'invention ;
- la figure 3 montre un schéma électronique de l'étage d'adaptation d'impédance dynamique FP2 ;
- la figure 4 représente l'alimentation à rendement élevé ;
- la figure 5 illustre la forme des courants respectivement en sortie de l'alimentation et appelé sur le bus ;
- la figure 6 montre le circuit d'un étage de commutation franche de la tension en sortie de ladite alimentation ;
- la figure 7 détaille l'étage récepteur utilisé dans le cadre de l'invention ;
- la figure 8 représente le double étage de mesure de la tension sur le bus d'une part, et de la tension en sortie de l'étage d'adaptation d'impédance dynamique en vue d'agir sur l'alimentation s'il y a lieu ;
- la figure 9 montre l'étage de création du signal de coupure imminente de la tension ; et
- la figure 10 représente le circuit de génération du signal d'interruption non masquable, en sortie de l'étage émetteur.

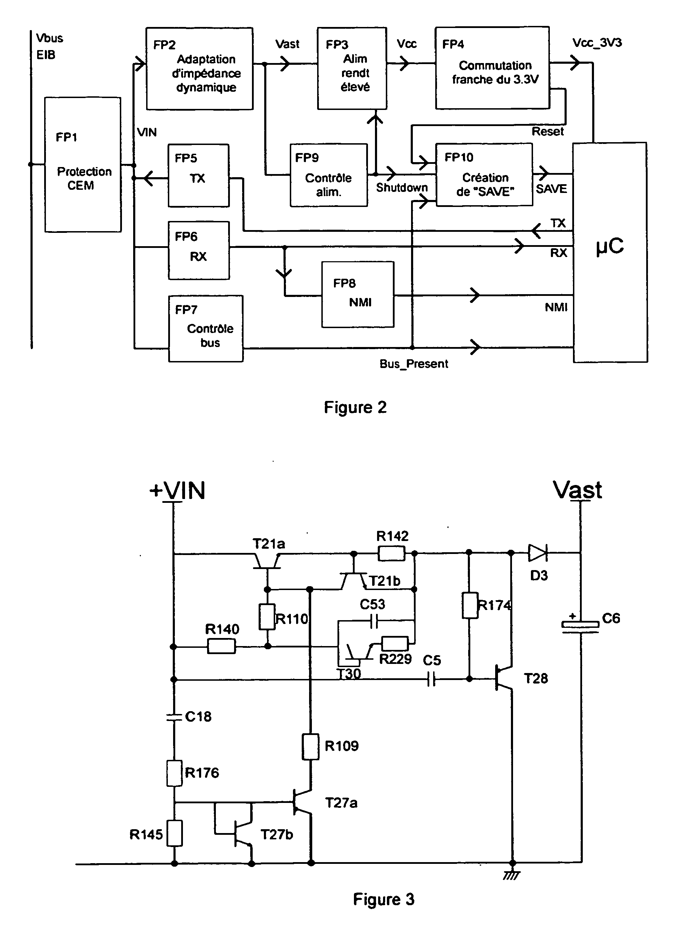

En référence à la figure 2, le bus EIB présente une tension Vbus comprise entre 20V et 30V, et qui doit présenter une immunité aux éventuelles surtensions en provenance des modules qui y sont connectés, qu'il doit au contraire protéger par rapport à d'éventuelles inversions de polarité. Un étage FP1 est connecté à cet effet au bus.

La tension de sortie de cet étage de protection FP1, utilisé par les sous-ensembles suivants du module, est intitulée VIN. Cette tension se retrouve aux bornes de quatre étages disposés en parallèle, l'étage FP2 d'adaptation d'impédance, l'étage FP5 d'émission des signaux à destination du bus, l'étage FP6 de réception des signaux en provenance du bus et l'étage FP7 de contrôle de la tension du bus, émettant un signal binaire selon que ladite tension est supérieure ou inférieure à un seuil prédéterminé.

En sortie de l'étage d'adaptation d'impédance dynamique FP2, la tension, intitulée Vast alimente un étage FP3 qui est une alimentation à rendement élevé. La tension prédéterminée (adapté à l'alimentation de circuits et composants électroniques) Vcc en sortie de cette alimentation est envoyée à un étage FP4 dit de commutation franche de ladite tension prédéterminée, en l'espèce fixée aux alentours de 3.3 volts.

Un étage FP9 de création d'un signal binaire de coupure de l'alimentation FP3 si la tension continue Vast est trop faible est placé entre FP2 et FP3, en parallèle à une connexion directe de ces étages, le signal généré par FP9 étant envoyé à un étage FP10 générant à l'adresse d'un microcontrôleur μC un signal de coupure imminente de la tension. Cet étage FP10 est d'ailleurs également relié à la sortie respectivement de l'étage FP7 de mesure de la tension de bus Vbus.

Enfin, un étage FP8 de création d'un signal d'interruption non masquable est connecté en sortie de l'étage FP6 de réception des signaux en provenance du bus, ledit signal étant envoyé à destination du microcontrôleur μC.

En référence à la figure 3, qui représente une configuration possible de FP2, l'adaptation d'impédance résulte de la nécessité de ne pas déformer la tension de bus lors de la transmission de communications. Pour que la consommation de courant dans un module reste raisonnablement constante malgré les variations de tension liées à la forme même du signal, une self électronique (R140, T21a, R142, C53) a été placée à l'entrée de l'étage, s'opposant aux variations du courant en entrée, en amont d'un redresseur constitué d'une diode D3 se déchargeant dans un condensateur C6.

Pour que l'inductance active ainsi créée soit performante, il faut que la capacité C53 ait une valeur élevée, de l'ordre de plusieurs µF. Dans ce cas, pour éviter une saturation de l'inductance, C53 doit être déchargée entre chaque phase active. Le circuit constitué du transistor T30 monté en diode (pour la sélection de la phase de décharge) et de la résistance de R22 de décharge, montés en parallèle à la capacité C53, est prévu à cet effet. La valeur de la résistance R229 permet de régler la constante de temps de la phase de décharge.

Un transistor T28, commandé par R174 et C5, assure la continuité du courant lorsque la diode D3 ne conduit pas. R174 est choisie assez faible pour que C5 ait le temps de se décharger lorsque T28 est bloqué, durant la phase d'égalisation du signal véhiculé par le bus. Pour que la tension reste suffisante durant cette phase quelque soit le courant, la consommation de courant à l'entrée, sur VIN, doit chuter de façon transitoire sur le front montant qui marque le début de ladite phase d'égalisation. En d'autres termes, il faut créer à cet effet une impédance négative de façon temporaire : c'est T27a qui assure cette fonction, via le réseau C18/R178 qui crée une conduction transitoire de T27a, qui pince la base de T21 a via R109, réduisant ainsi le courant.

R178 limite le courant transitoire lors d'un front descendant et R145, montré entre la base de T27a et la masse, permet de fiabiliser le blocage de ce dernier. C18 se décharge à chaque front montant via T27b qui est monté en diode. Enfin, le transistor T21 b a pour but de limiter le courant.

La figure 4 montre un circuit préférentiel pour FP3, l'alimentation à haut rendement. Elle repose sur un montage Buck à hystérésis, avec une self L1 et une capacité C19 en sortie d'un comparateur NS, une rétroaction revenant sur l'entrée inverseuse via le pont R49-R50 qui fixent la tension de sortie. Un régulateur linéaire Reg génère une tension de référence via un pont de résistances R44/R45 pour l'entrée + du comparateur NS, dotée par ailleurs d'une capacité C17 de stabilisation de ladite tension, permettant également d'adoucir le démarrage. Les capacités C15 et C16 stabilisent quant à elles le régulateur de tension Reg.

Le hacheur du montage Buck, précédant la self L1, est constitué d'un transistor Q7A commandé par un autre transistor Q7B en collecteur ouvert dont la base est reliée via une résistance R46, qui permet de préserver une gamme de tensions correctes en sortie du comparateur NS, au régulateur Reg. R47 permet d'assurer un blocage fiable de Q7A, et un meilleur rendement en permettant une descente en courant plus rapide.C18 permet d'augmenter la fréquence d'oscillation du montage Buck en apportant davantage de variations à l'entrée inverseuse du comparateur NS.

En entrée du régulateur Reg, le transistor Q1 commandé par le pont de résistances R42/R43 et stabilisé par la capacité C14 sert de ballast pour limiter la tension d'entrée dudit régulateur qui supporte une tension maximale, en l'espèce de l'ordre de 16V lorsque la tension en entrée de l'étage Vast peut monter jusqu'aux environs de 30V (29V).

Pour un tel circuit, lorsque la tension d'entrée Vast monte, une tension apparaît en sortie du régulateur Reg, ce qui déclenche la conduction de Q7B via R46. Q7A devient passant à son tour, faisant très rapidement monter Vcc. Dès que cette dernière atteint la tension prédéterminée attendue, en vue de l'alimentation des composants, de l'ordre de 3,3V, le comparateur NS fonctionne correctement, car il est précisément alimenté par cette tension et pince dès lors la base de Q7B : la régulation est alors lancée sur son mode de fonctionnement normal. Il et à noter que ce fonctionnement permet une réduction de la consommation à vide, ce qui est l'un des objectifs de la présente invention, puisque le comparateur n'est alimenté que sous certaines conditions et non pas en permanence par une alimentation linéaire classique. Ce circuit permet un démarrage fiable et sans surtensions.

En sortie de FP3, la commutation franche, donnant lieu à sensiblement la même tension Vcc_3V3 « franchement commutée » est réalisée via l'étage FP4 (voir en figure 6) qui obéit à une logique de commutation qui s'apparente à celle du hacheur de l'étage FP3 : le composant Ctrl de contrôle de réinitialisation commande via sa sortie Reset un transistor Q8B contrôlant à son tour un transistor Q8A placé en sortie de l'étage FP4, constituant ensemble un commutateur à commutation rapide. Des résistances permettent classiquement de polariser les transistors, et de fiabiliser le cas échéant leur blocage.

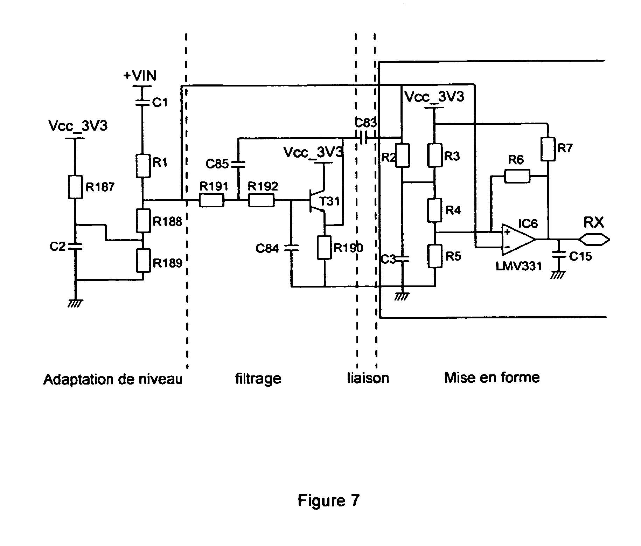

Les étages FP5 et FP6 assurent respectivement l'émission et la réception des signaux vers et en provenance du bus. Le récepteur, apparaissant en figure 7, est basé sur un amplificateur opérationnel utilisé en comparateur, qui bascule lors des variations de la tension sur le bus lorsqu'il y a communication. L'étage récepteur est divisé, par des traits pointillés verticaux, en des circuits assurant des fonctions distinctes et coopérant en vue d'assurer la mise en oeuvre de la réception.

L'amplificateur opérationnel, au coeur du circuit de mise en forme des signaux de l'étage récepteur, fonctionne en collecteur ouvert, avec R6 et R7 suffisamment faible pour assurer un temps de montée court, de l'ordre de 0,5 µS. C3 constitue une masse dynamique autour de laquelle l'image de la tension de bus fluctue. La tension VIN est soumise au pont diviseur constitué de R1 et R2, en aval d'une capacité C1 qui prélève la tension alternative sur le bus, et filtrée par un filtre passe-bas basé sur une structure de type Sallen Key constituant le circuit de filtrage. R4 introduit simultanément le seuil de détection et l'hystérésis, défini par le rapport R4/R6.

Le choix d'un filtre de type Sallen Key permet d'assurer l'immunité aux émissions conduites dans la bande 260-310 kHz à 3V/m. Un tel filtre actif, choisi d'ordre 2 dans l'exemple, permet une atténuation plus raide aux alentours de la fréquence de coupure. En amont du filtre, une adaptation de niveau comporte, outre la capacité C1 précitée, des résistances R187 et R189 assurant une référence de tension stabilisée par C2. R1 et R188 réalisent la mise à niveau du signal prélevé au niveau de C1, en vue d'attaquer le filtre de type Sallen Key. Celui-ci est organisé autour du transistor T31 en émetteur commun, faisant office de transistor « suiveur » utilisée dans ce type de structure.

Une capacité de liaison C83 permet d'isoler la partie alternative du signal par rapport à la nouvelle référence de tension continue stabilisée.

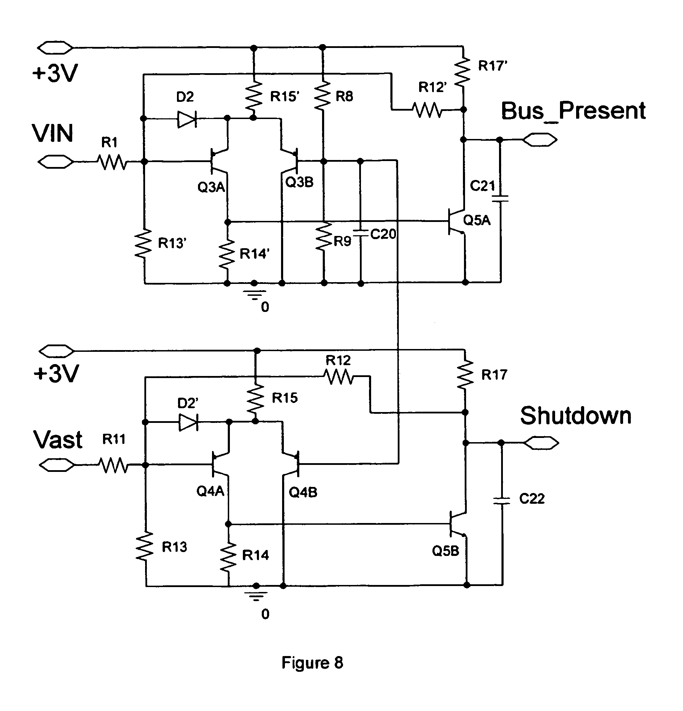

Les étages FP7 et FP9 de contrôle de tension sont jumeaux (voir en figure 8), à l'exception de certaines valeurs de résistances, et reliés par un pont de résistance R8/R9 fixant avec la capacité C20 une référence de tension. Lorsque la tension en entrée (VIN, Vast) monte, le potentiel de la base du transistor en entrée Q3A, Q4A jusqu'à blocage, faisant passer le signal en sortie respectivement Bus_Present et Shutdown au niveau haut. La valeur de la résistance R12, R12', détermine l'hystérésis, alors que la diode D2, D2' protège la base de Q3A, Q4A en inverse.

Un étage différentiel est formé par Q3B, Q4B à des fins de compensation en température des tensions base-émetteur.

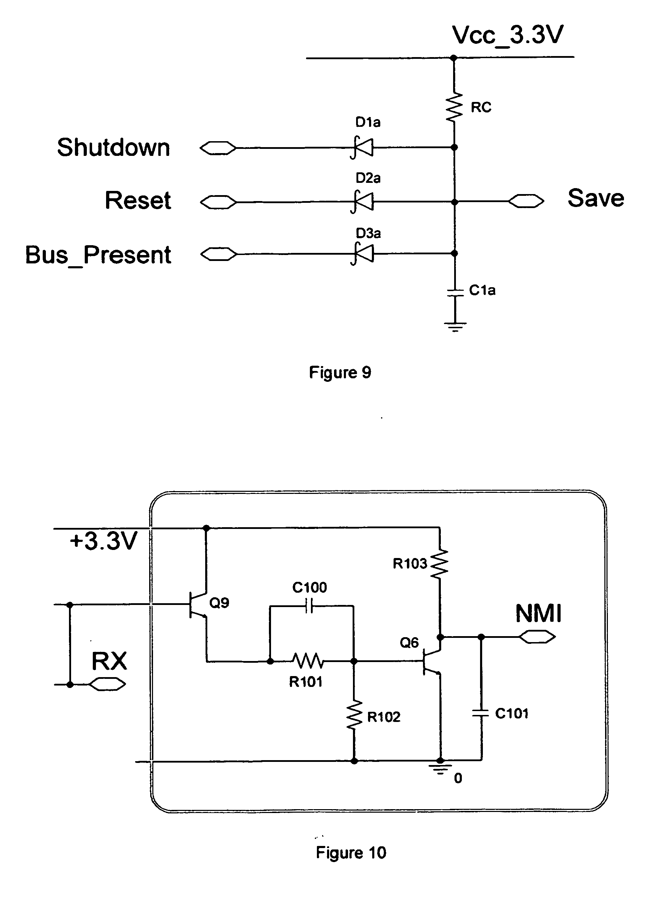

La figure 9 montre une connexion possible mise en oeuvre pour la génération d'un signal SAVE de coupure imminente de tension adressé au microcontrôleur μC, et qui est relié au signal Vcc_3V3 en sortie de l'étage FP4. Le signal SAVE est donc à un niveau bas lorsque Vcc_3V3 est lui-même à l'état bas. Le schéma revient par ailleurs à mettre en circuit l'égalité logique suivante :

$$\text{SAVE} = \text{Bus\_Present} \times \text{Reset} \times \text{Shutdown}$$

indiquant au microcontrôleur qu'il va y avoir coupure imminente de tension si l'une au moins de ces conditions sur les tensions contrôlées ou sur la réinitialisation est remplie.

Le signal d'interruption non masquable NMI dont la génération est réalisée par le circuit de l'étage FP8 apparaissant en figure 10 est nécessaire au microcontrôleur μC pour lire le signal RX en sortie de l'étage FP6 de réception des signaux en provenance du bus tel que montré en figure 7. Lorsque RX passe à 1, NMI passe immédiatement à 0. A l'inverse, lorsque RX passe à 0, NMI doit passer à 1 avec un retard tel que le niveau soit revenu à 1 au front suivant.

A cet effet, le transistor Q9 disposé en entrée est un simple suiveur permettant de préserver le niveau haut de RX. C100 aide à la commutation de Q6, et R100 limite les pointes de courant qui pourraient être dues à cette capacité. Lorsque RX passe au niveau bas, Q9 bloque, ainsi que Q6 et C101 se recharge alors à travers R103, ce qui assure le retard de NMI.

## Revendications

1. Dispositif de connexion à un bus de type EIB ou KNX de modules d'entrée/sortie gérant des signaux en provenance ou à destination de périphériques domotiques, comportant un étage de protection (FP1) directement connecté au bus, au moins une alimentation (FP3, FP4) pour le module, un étage récepteur (FP6) recevant les signaux du bus à l'adresse du module, un étage émetteur (FP5) émettant des signaux en provenance du module vers le bus, **caractérisé en ce qu'**il comporte, en parallèle et en aval de l'étage de protection (FP1):

   - un étage d'adaptation d'impédance dynamique (FP2) apte à générer une impédance dynamique élevée, connecté à LADITE alimentation à rendement élevé (FP3) générant une tension de sortie prédéterminée ;
   - LEDIT étage émetteur (FP5);
   - LEDIT étage récepteur (FP6);
   - un étage de contrôle de la tension de bus (FP7);

   Ces étages étant reliés à un microcontrôleur (μC) de gestion des signaux du module.

2. Dispositif de connexion à un bus de type EIB ou KNX de modules d'entrée/sortie selon la revendication précédente, **caractérisé en ce que** l'étage d'adaptation d'impédance dynamique FP2 est basé sur une inductance électronique constitué d'un circuit équivalent comportant une résistance R140 en série avec une capacité C53, raccordés en parallèle à un transistor bipolaire T21 a de type NPN en série avec une résistance R142 connectée à l'émetteur et dont la base est connectée entre la résistance R140 et la capacité C53.

3. Dispositif de connexion à un bus de type EIB ou KNX de modules d'entrée/sortie selon la revendication précédente, **caractérisé en ce qu'**un transistor NPN T21b limiteur de courant est interposé entre la base du transistor T21 a du circuit équivalent formant l'inductance électronique et la sortie de ce circuit, dont l'émetteur est raccordée en sortie de ce dernier et la base est connectée entre ledit transistor T21a de l'inductance électronique et sa résistance R142 d'émetteur.

4.  Dispositif de connexion à un bus de type EIB ou KNX de modules d'entrée/sortie selon l'une des revendications 2 et 3, **caractérisé en ce qu'**un interrupteur électronique est monté en aval de ladite inductance électronique, constitué d'un transistor bipolaire T28 de type PNP dont l'émetteur est connecté à la sortie du circuit équivalent à l'inductance électronique et le collecteur à la masse, et qui est polarisé par une résistance R17 et une capacité C5 respectivement raccordés en sortie et en entrée dudit circuit équivalent.

5.  Dispositif de connexion à un bus de type EIB ou KNX de modules d'entrée/sortie selon la revendication précédente, **caractérisé en ce qu'**un étage redresseur est disposé en parallèle avec le transistor de l'interrupteur électronique, constitué d'une diode D3 en série avec un condensateur polarisé C6 dont la borne positive constitue la tension de sortie de l'étage d'adaptation d'impédance dynamique.

6.  Dispositif de connexion à un bus de type EIB ou KNX de modules d'entrée/sortie selon l'une des revendications 2 à 5, **caractérisé en ce que** la base du transistor T21 a du circuit équivalent à une inductance est connectée au collecteur d'un transistor bipolaire T27a de type NPN polarisé entre l'entrée du circuit et la masse via une capacité C18 et un pont de résistances (R176, R145) entre lesquelles est connectée la base dudit transistor T27a, en vue de le rendre passant de manière transitoire lors d'un front montant de la tension d'entrée de l'étage d'adaptation d'impédance dynamique.

7.  Dispositif de connexion à un bus de type EIB ou KNX de modules d'entrée/sortie selon l'une des revendications 2 à 5, **caractérisé en ce que** l'alimentation est basée sur un convertisseur Buck à hacheur constitué d'un transistor bipolaire PNP Q7A dont la base est commandée par le collecteur d'un transistor bipolaire NPN Q7B dont la base est polarisée par un régulateur Reg de la tension d'entrée et commandée par un comparateur NS connecté d'une part à la tension d'entrée de l'alimentation via ledit régulateur Reg et d'autre part en rétroaction à une fraction de sa tension de sortie via un pont diviseur dont les résistances (R49, R50) fixent ladite tension de sortie.

8.  Dispositif de connexion à un bus de type EIB ou KNX de modules d'entrée/sortie selon la revendication précédente, **caractérisé en ce que** la base dudit transistor PNP Q7A est reliée à l'entrée de l'alimentation NS via une résistance R47 apte à assurer un blocage du transistor PNP Q7A lorsque le transistor NPN Q7B de commande est bloqué.

9.  Dispositif de connexion à un bus de type EIB ou KNX de modules d'entrée/sortie selon l'une des revendications 7 et 8, **caractérisé en ce que** le comparateur NS est alimenté par la tension de sortie Vcc de l'alimentation.

10. Dispositif de connexion à un bus de type EIB ou KNX de modules d'entrée/sortie selon l'une des revendications 7 à 9, **caractérisé en ce qu'**un montage ballast à transistor bipolaire NPN Q1 polarisé par un pont de résistance (R42, R43) est interposé entre l'entrée de l'alimentation NS et le régulateur Reg.

11. Dispositif de connexion à un bus de type EIB ou KNX de modules d'entrée/sortie selon l'une des revendications précédentes, **caractérisé en ce que** l'alimentation FP3 est suivie d'un étage de commutation FP4 commutant la tension continue prédéterminée générée par l'alimentation FP3.

12. Dispositif de connexion à un bus de type EIB ou KNX de modules d'entrée/sortie selon la revendication précédente, **caractérisé en ce que** l'étage de commutation FP4 comporte un composant de contrôle de la réinitialisation Ctrl d'un microcontrôleur, alimenté en sortie de l'alimentation et dont la sortie de réinitialisation commande un hacheur via la base d'un transistor bipolaire NPN Q8B en collecteur ouvert raccordé à un transistor PNP Q8A, ladite base étant connectée via un pont de résistance à l'émetteur du transistor PNP Q8A en sortie de l'étage de commutation FP4.

13. Dispositif de connexion à un bus de type EIB ou KNX de modules d'entrée/sortie selon l'une des revendications précédentes, **caractérisé en ce que** l'étage de contrôle de tension FP7 du bus comporte des moyens de contrôle de la tension du bus VIN générant à destination d'un microcontrôleur µC un signal de sortie binaire indiquant si ladite tension VIN est inférieure à un seuil prédéterminé.

14. Dispositif de connexion à un bus de type EIB ou KNX de modules d'entrée/sortie selon l'une des revendications précédentes, **caractérisé en ce qu'**un étage de contrôle de la tension FP9 est connecté en sortie de l'étage d'adaptation d'impédance dynamique FP2, émettant un signal binaire à l'adresse de l'alimentation à rendement élevé FP3 en vue de la couper lorsque la tension Vast en sortie de l'étage d'adaptation d'impédance dynamique FP2 est trop faible.

**15.** Dispositif de connexion à un bus de type EIB ou KNX de modules d'entrée/sortie selon la revendication précédente, **caractérisé en ce que** les étages de contrôle de la tension du bus FP7 ou de la tension FP9 en sortie de l'étage d'adaptation d'impédance dynamique FP2 comportent en entrée un transistor bipolaire de type PNP (Q3A, Q4A) dont la base est raccordée à ladite tension (VIN, Vast) qui le polarise via un pont de résistance, et dont l'émetteur commande la base d'un transistor de type NPN (Q5A, Q5B) polarisée par une résistance (R14, R14'), le signal binaire étant prélevé au niveau du collecteur de ce dernier relié à une tension continue prédéterminée via une résistance (R17, R17') fixant le niveau de tension du signal à l'état haut.

**16.** Dispositif de connexion à un bus de type EIB ou KNX de modules d'entrée/sortie selon la revendication précédente, **caractérisé en ce qu'**un second transistor (Q3B, Q4B) identique au transistor d'entrée est monté avec ce dernier en montage différentiel pour établir une compensation en température des tensions base/émetteur desdits transistors (Q3A, Q3B ; Q4A, Q4B).

**17.** Dispositif de connexion à un bus de type EIB ou KNX de modules d'entrée/sortie selon la revendication précédente, **caractérisé en ce qu'**un pont de résistance (R8, R9) connecté entre la tension continue prédéterminée et la masse alimente la base des seconds transistors (Q3B, Q4B) formant le montage différentiel des deux étages (FP7, FP9) respectivement de contrôle de la tension du bus et de la tension en sortie de l'étage d'adaptation d'impédance dynamique FP2, en vue de constituer un référentiel de tension.

**18.** Dispositif de connexion à un bus de type EIB ou KNX de modules d'entrée/sortie selon l'une des revendications précédentes, **caractérisé en ce qu'**un signal SAVE de coupure imminente de la tension est raccordé via une résistance RC à la tension continue prédéterminée apparaissant en sortie de l'étage de commutation FP4, et connecté à un microcontrôleur μC.

**19.** Dispositif de connexion à un bus de type EIB ou KNX de modules d'entrée/sortie selon l'une des revendications précédentes, **caractérisé en ce qu'**un étage de génération d'un signal d'interruption non masquable FP8 à destination du microcontrôleur est placé en sortie de l'étage de réception FP6.

**20.** Dispositif de connexion à un bus de type EIB ou KNX de modules d'entrée/sortie selon la revendication précédente, **caractérisé en ce que** l'étage de génération d'un signal d'interruption non masquable FP8 est constitué en entrée d'un transistor bipolaire Q9 de type NPN dont la base est connectée à la sortie de l'étage de réception FP6, et dont l'émetteur commande via un pont de résistance (R101, R102) la base d'un second transistor NPN Q6 dont le collecteur constitue la sortie générant le signal binaire d'interruption non masquable NMI.

**21.** Dispositif de connexion à un bus de type EIB ou KNX de modules d'entrée/sortie selon la revendication précédente, **caractérisé en ce qu'**une capacité C100 est connectée en parallèle avec la résistance R101 placée entre respectivement l'émetteur et la base de chacun des deux transistors bipolaires (Q9, Q6).

**22.** Dispositif de connexion à un bus de type EIB ou KNX de modules d'entrée/sortie selon l'une des revendications 20 et 21, **caractérisé en ce qu'**une capacité C101 découple la sortie sur collecteur de l'étage de génération d'un signal d'interruption non masquable FP8, conférant un retard au signal de sortie pendant qu'elle se remplit.

**23.** Dispositif de connexion à un bus de type EIB ou KNX de modules d'entrée/sortie selon l'une quelconque des revendications précédentes, **caractérisé en ce que** l'étage récepteur FP6 est basé sur un amplificateur opérationnel IC6 utilisé en comparateur, fonctionnant en collecteur ouvert avec une résistance R7 raccordée entre la sortie de l'amplificateur et à la tension de l'alimentation à haut rendement, dont l'entrée non inverseuse est connectée à ladite tension de l'alimentation via un premier pont diviseur (R3+R4, R5) et l'entrée inverseuse est raccordée à la tension de bus VIN via un second pont diviseur (R1, R2) et un filtre passe-bas, une capacité C3 constituant une masse dynamique étant connectée d'une part en aval de R2 et en amont de R4 et d'autre part à la masse, R4 définissant le seuil de détection et, avec une résistance de contreréaction R6 connectée entre la sortie de l'amplificateur opérationnel et l'entrée non inverseuse, également l'hystérésis formé par le rapport R4/R6.

**24.** Dispositif de connexion à un bus de type EIB ou KNX de modules d'entrée/sortie selon la revendication précédente, **caractérisé en ce que** le filtre passe-bas est constitué d'une capacité C2 connectée entre R1 et la masse.

**25.** Dispositif de connexion à un bus de type EIB ou KNX de modules d'entrée/sortie selon la revendication 23, **caractérisé en ce que** le filtre passe-bas est constitué d'un filtre actif constitué d'un circuit obéissant à une structure de Sallen Key connecté en aval du pont diviseur (R1, R2) et comportant un transistor suiveur T31.

**Claims**

**1.** Device used to connect to an EIB or a KNX type bus of input/output modules managing signals originating from or destined for home automation devices, containing a protection stage (FP1) directly connected to the bus, at least one power supply (FP3, FP4) for the module, a receiver stage (FP6) receiving the signals from the bus to the module, a transmitter stage (P5) transmitting signals from the module towards the bus, **characterized in that** it contains, in parallel and down circuit from the protection stage (FP1):

- a dynamic impedance matching stage (FP2) capable of generating a high dynamic impedance, connected to the said high-performance power supply (FP3) generating a predetermined voltage output;
- the said transmitter stage (FP5);
- the said receiver stage (FP6);
- a bus voltage control stage (FP7);

these stages being connected to a microcontroller (µC) managing the signal of the module.

**2.** Device used to connect to an EIB or a KNX type bus of input/output modules according to the preceding claim, **characterized in that** the dynamic impedance matching stage FP2 is based on an electronic inductance made up of an equivalent circuit containing a resistor R140 in series with a capacitor C53, connected in parallel to an NPN bipolar transistor T21 a in series with a resistor R142 connected to the transmitter and of which the base is connected between the resistor R140 and the capacitor C53.

**3.** Device used to connect to an EIB or a KNX type bus of input/output modules according to the preceding claim, **characterized in that** a current limiting NPN transistor T21b is placed between the base of the transistor T21a of the equivalent circuit forming the electronic inductance and the output of the circuit, of which the transmitter is connected to the output of the latter and the base is connected between the said transistor T21 a of the electronic inductance and its transmitter resistor R142.

**4.** Device used to connect to an EIB or a KNX type bus of input/output modules according to one of the claims 2 and 3, **characterized in that** an electronic switch is mounted down circuit of the said electronic inductance, made up of a PNP bipolar transistor T28 of which the transmitter is connected to the output of the circuit equivalent to the electronic inductance and the collector to ground, and which is polarized by a resistor R17 and a capacitor C5 respectively connected to the output and the input of the said equivalent circuit.

**5.** Device used to connect to an EIB or a KNX type bus of input/output modules according to the preceding claim, **characterized in that** a rectifier stage is placed in parallel with the transistor of the electronic switch, made up of a diode D3 in series with a polarized condenser C6 of which the positive connection is the output voltage of the dynamic impedance matching stage.

**6.** Device used to connect to an EIB or a KNX type bus of input/output modules according to one of the claims 2 to 5, **characterized in that** the base of the transistor T21 a of the circuit equivalent to an inductance is connected to the collector of an NPN bipolar transistor T27a polarized between the input of the circuit and ground via a capacitor C18 and a resistance bridge (R176, R145) between which is connected the base of the said transistor T27a, for the purpose of making it bypass in a transitory manner in case of a rapid rise in the input voltage of the dynamic impedance matching stage.

**7.** Device used to connect to an EIB or a KNX type bus of input/output modules according to one of the claims 2 to 5, **characterized in that** the supply is based on a Buck chopper converter made up of a PNP bipolar transistor Q7A of which the base is controlled by the collector of an NPN bipolar transistor Q7B of which the base is polarized by an input voltage regulator Reg and controlled by a comparator NS connected on one side to the supply input voltage via the said regulator Reg and on the other side in feedback at a fraction of its output voltage via a bridge divider of which the resistors (R49, R50) stabilise the said output voltage.

8. Device used to connect to an EIB or a KNX type bus of input/output modules according to the preceding claim, **characterized in that** the base of the said PNP transistor Q7A is connected to the supply NS input via a resistor R47 capable of blocking the PNP transistor Q7A when the NPN control transistor Q7B is blocked.

9. Device used to connect to an EIB or a KNX type bus of input/output modules according to one of the claims 7 and 8, **characterized in that** the comparator NS is supplied by the output voltage Vcc of the supply.

10. Device used to connect to an EIB or a KNX type bus of input/output modules according to one of the claims 7 to 9, **characterized in that** an NPN bipolar transistor ballast assembly Q1 polarized by a resistance bridge (R42, R43) is placed between the supply NS input and the regulator Reg.

11. Device used to connect to an EIB or a KNX type bus of input/output modules according to one of the preceding claims, **characterized in that** the supply FP3 is followed by a switching stage FP4 switching the predetermined DC voltage generated by the supply FP3.

12. Device used to connect to an EIB or a KNX type bus of input/output modules according the preceding claim, **characterized in that** the switching stage FP4 contains a re-initialisation control component Ctrl for a microcontroller, supplied at the output of the supply and of which the re-initialisation output controls a chopper via the base of an NPN bipolar transistor Q8B with an open collector connected to a PNP transistor Q8A, the said base being connected via a resistance bridge to the transmitter of the PNP transistor Q8A at the output of the switching stage FP4.

13. Device used to connect to an EIB or a KNX type bus of input/output modules according to one of the preceding claims, **characterized in that** the bus voltage control stage FP7 contains a means of controlling the bus voltage VIN generating a binary output signal to a microcontroller $\mu$C, indicating if the said voltage VIN is inferior to a predetermined threshold.

14. Device used to connect to an EIB or a KNX type bus of input/output modules according to one of the preceding claims, **characterized in that** a voltage control stage FP9 is connected at the output of the dynamic impedance matching stage FP2, transmitting a binary signal to the high-performance power supply FP3 in order to switch it off when the voltage Vast at the output of the dynamic impedance matching stage FP2 is too low.

15. Device used to connect to an EIB or a KNX type bus of input/output modules according to the preceding claim, **characterized in that** the control stages of the bus voltage FP7 or the voltage FP9 at the output of the dynamic impedance matching stage FP2 contain, at the input, a PNP bipolar transistor (Q3A, Q4A) of which the base is connected to the said voltage (VIN, Vast) which polarizes it via a resistance bridge, and of which the transmitter controls the base of an NPN transistor (Q5A, Q5B) polarized by a resistor (R14, R14'), the binary signal being taken from the collector of the latter connected to a predetermined DC voltage via a resistor (R17, R17') keeping the signal voltage high.

16. Device used to connect to an EIB or a KNX type bus of input/output modules according to the preceding claim, **characterized in that** a second transistor (Q3B, Q4B) identical to the input transistor is mounted in a differential arrangement with the latter in order to establish a temperature compensation for the base/transmitter voltages of the said transistors (Q3A, Q3B; Q4A, Q4B).

17. Device used to connect to an EIB or a KNX type bus of input/output modules according to the preceding claim, **characterized in that** a resistance bridge (R8, R9) connected between the predetermined DC voltage and ground supplies the base of the second transistors (Q3B, Q4B) forming a differential arrangement of the two stages (FP7, FP9) of the bus control voltage and the output voltage of the dynamic impedance matching stage FP2 respectively, in order to create a reference voltage.

18. Device used to connect to an EIB or a KNX type bus of input/output modules according to one of the preceding claims, **characterized in that** an imminent voltage cut-off signal SAVE is connected via a resistor RC to the predetermined DC voltage appearing at the output of the switching stage FP4, and connected to a microcontroller $\mu$C.

19. Device used to connect to an EIB or a KNX type bus of input/output modules according to one of the preceding claims, **characterized in that** a stage generating a non-concealable interruption signal FP8 to the microcontroller is placed at the output of the receiver stage FP6.

20. Device used to connect to an EIB or a KNX type bus of input/output modules according to the preceding claim, **characterized in that** the stage generating the non-concealable interruption signal FP8 is made up of, at the input, an NPN bipolar transistor Q9 of which the base is connected to the output of the receiver stage FP6, and of which the transmitter controls via a resistance bridge (R101, R102) the base of a second NPN transistor Q6 of which the collector is the output generating the binary non-concealable interruption signal NMI.

21. Device used to connect to an EIB or a KNX type bus of input/output modules according to the preceding claim, **characterized in that** a capacitor C100 is connected in parallel with the resistor R101 placed between the transmitter and the base of each of the two bipolar transistors (Q9, Q6) respectively.

22. Device used to connect to an EIB or a KNX type bus of input/output modules according to one of the claims 20 and 21, **characterized in that** a capacitor C101 uncouples the output on the collector of the non-concealable interruption signal generator stage FP8, giving a delay to the output signal whilst it re-charges.

23. Device used to connect to an EIB or a KNX type bus of input/output modules according to one of any of the preceding claims, **characterized in that** the receiver stage FP6 is based on an operational amplifier IC6 used as a comparator, functioning as an open collector with a resistor R7 connected between the output of the amplifier and the voltage of the high-performance power supply, of which the non-inverting input is connected to the said voltage of the supply via a first dividing bridge (R3+R4, R5) and the inverting input is connected to the bus voltage VIN via a second dividing bridge (R1, R2) and a low-pass filter, a capacitor C3 making up a dynamic ground being connected on one side down circuit of R2 and up circuit of R4 and on the other side to ground, R4 defining the detection threshold and, with a feedback resistor R6 connected between the output of the operational amplifier and the non-inverting input, equally the hysteresis formed by the ratio R4/R6.

24. Device used to connect to an EIB or a KNX type bus of input/output modules according to the preceding claim, **characterized in that** the low-pass filter is made up of a capacitor C2 connected between R1 and ground.

25. Device used to connect to a bus of EIB or type of KNX input/output modules according to claim 23, **characterized in that** the low-pass filter is made up of an active filter composed of a circuit conforming to the structure of a Sallen Key connected down circuit of the dividing bridge (R1, R2) and containing a follower transistor T31.

**Patentansprüche**

1. Verbindungsvorrichtung an einen EIB- oder KNX-TP-Bus von Eingangs-/Ausgangsmodulen, der Signale von oder zu domotischen Peripherien verwaltet, die eine direkt mit dem Bus verbundene Schutzstufe (FP1), mindestens eine Versorgung (FP3, FP4) für das Modul, eine Empfangsstufe (FP6), die die Signale des Busses an die Adresse des Moduls empfängt, eine Sendestufe (FP5), die Signale vom Modul an den Bus sendet, umfasst, **dadurch gekennzeichnet, dass** sie parallel und nach der Schutzstufe (FP1) aufweist:

   - eine Anpassungsstufe der dynamischen Impedanz (FP2), die imstande ist, eine hohe dynamische Impedanz zu erzeugen, die mit der Hochleistungsversorgung (FP3) verbunden ist, die eine vorbestimmte Ausgangsspannung erzeugt,
   - die Sendestufe (FP5),
   - die Empfangsstufe (FP6),
   - eine Überwachungsstufe der Busspannung (FP7),

   wobei diese Stufen mit einem Microcontroller ($\mu$C) zur Verwaltung der Signale des Moduls verbunden sind.

2. Verbindungsvorrichtung an einen EIB- oder KNX-TP-Bus von Eingangs-/Ausgangsmodulen nach vorangehendem Anspruch, **dadurch gekennzeichnet, dass** die Anpassungsstufe der dynamischen Impedanz FP2 auf einer elektronischen Induktivität basiert, die aus einem äquivalenten Kreis besteht, der einen Widerstand R140 in Reihe mit einer Kapazität C53 aufweist, die mit einem bipolaren Transistor T21a des Typ NPN in Reihe mit einem Widerstand R142 parallel geschaltet sind, der mit dem Sender verbunden ist und dessen Basis zwischen dem Widerstand R140 und der Kapazität C53 geschaltet ist.

3. Verbindungsvorrichtung an einen EIB- oder KNX-TP-Bus von Eingangs-/Ausgangsmodulen nach vorangehendem Anspruch, **dadurch gekennzeichnet, dass** ein strombegrenzender Transistor NPN T21b zwischen der Basis des Transistors T21a des äquivalenten Kreises, der die elektronische Induktivität bildet, und dem Ausgang dieses Kreises, zwischengeschaltet ist, wobei der Sender am Ausgang dieses Kreises angeschlossen ist, und die Basis zwischen dem Transistor T21a der elektronischen Induktivität und seinem Senderwiderstand R142 geschaltet ist.

4. Verbindungsvorrichtung an einen EIB- oder KNX-TP-Bus von Eingangs-/Ausgangsmodulen nach einem der Ansprüche 2 und 3, **dadurch gekennzeichnet, dass** ein elektronischer Unterbrecher nach der elektronischen Induktivität montiert ist, der aus einem bipolaren Transistor T28 vom Typ PNP besteht, dessen Sender mit dem Ausgang des äquivalenten Kreises mit elektronischer Induktivität und dem Sammler an der Masse verbunden ist, und der von einem Widerstand R17 und einer Kapazität C5 polarisiert wird, die jeweils am Ausgang und am Eingang des äquivalenten Kreises angeschlossen sind.

5. Verbindungsvorrichtung an einen EIB- oder KNX-TP-Bus von Eingangs-/Ausgangsmodulen nach vorangehendem Anspruch, **dadurch gekennzeichnet, dass** eine Gleichrichterstufe parallel zum Transistor des elektronischen Unterbrechers angeordnet ist, die aus einer Diode D3 in Reihe mit einem polarisierten Kondensator C6 besteht, wobei die positive Klemme die Ausgangsspannung der Anpassungsstufe der dynamischen Impedanz bildet.

6. Verbindungsvorrichtung an einen EIB- oder KNX-TP-Bus von Eingangs-/Ausgangsmodulen nach einem der Ansprüche 2 bis 5, **dadurch gekennzeichnet, dass** die Basis des Transistors T21 a des äquivalenten Kreises mit einer Induktivität mit dem Sammler eines polarisierten bipolaren Transistors T27a vom Typ NPN zwischen dem Eingang des Kreises und der Masse über eine Kapazität C18 und eine Widerstandsbrücke (R176, R145) verbunden ist, zwischen denen die Basis des Transistors T27a geschaltet ist, um ihn bei einer ansteigenden Eingangsspannungsfront der Anpassungsstufe der dynamischen Impedanz vorübergehend durchgängig zu machen.

7. Verbindungsvorrichtung an einen EIB- oder KNX-TP-Bus von Eingangs-/Ausgangsmodulen nach einem der Ansprüche 2 bis 5, **dadurch gekennzeichnet, dass** die Versorgung auf einem Buck-Konverter mit Zerhacker basiert, der von einem bipolaren Transistor PNP Q7A gebildet wird, dessen Basis vom Sammler eines bipolaren Transistors NPN Q7B gesteuert wird, dessen Basis von einem Regler Reg der Eingansspannung polarisiert wird und von einem Vergleicher NS gesteuert wird, der einerseits mit der Eingangsspannung der Versorgung über den Regler Reg und andererseits rückwirkend mit einem Bruchteil seiner Ausgangsspannung über eine Teilerbrücke verbunden ist, wobei die Ausgangsspannung von den Widerständen (R49, R50) bestimmt wird.

8. Verbindungsvorrichtung an einen EIB- oder KNX-TP-Bus von Eingangs-/Ausgangsmodulen nach vorangehendem Anspruch, **dadurch gekennzeichnet, dass** die Basis des Transistors PNP Q7A mit den Eingang der Versorgung NS über einen Widerstand R47 verbunden ist, der imstande ist, eine Blockade des Transistors PNP Q7A sicherzustellen, wenn der Steuertransistor NPN Q7B blockiert ist.

9. Verbindungsvorrichtung an einen EIB- oder KNX-TP-Bus von Eingangs-/Ausgangsmodulen nach einem der Ansprüche 7 und 8, **dadurch gekennzeichnet, dass** der Vergleicher NS von der Ausgangsspannung Vcc der Versorgung versorgt wird.

10. Verbindungsvorrichtung an einen EIB- oder KNX-TP-Bus von Eingangs-/Ausgangsmodulen nach einem der Ansprüche 7 bis 9, **dadurch gekennzeichnet, dass** eine Ballastmontage mit durch eine Widerstandsbrücke (R42, R43) polarisiertem bipolarem Transistor NPN Q1 zwischen dem Eingang der Versorgung NS und dem Regler Reg zwischengestellt ist.

11. Verbindungsvorrichtung an einen EIB- oder KNX-TP-Bus von Eingangs-/Ausgangsmodulen nach einem der vorangehenden Ansprüche, **dadurch gekennzeichnet, dass** der Versorgung FP3 eine Umschaltstufe FP4 folgt, die die von der Versorgung FP3 erzeugte vorbestimmte Gleichspannung umschaltet.

12. Verbindungsvorrichtung an einen EIB- oder KNX-TP-Bus von Eingangs-/Ausgangsmodulen nach vorangehendem Anspruch, **dadurch gekennzeichnet, dass** die Umschaltstufe FP4 ein Bauteil zur Überwachung der Reinitialisierung Ctrl eines Microcontrollers aufweist, das am Ausgang der Versorgung versorgt wird und dessen Reinitialisierungsausgang einen Zerhacker über die Basis eines bipolaren Transistors NPN Q8B als offener Sammler steuert, der mit einem Transistor PNP Q8A verbunden ist, wobei die Basis über eine Widerstandsbrücke mit dem Sender des Transistors PNP Q8A am Ausgang der Umschaltstufe FP4 verbunden ist.

13. Verbindungsvorrichtung an einen EIB- oder KNX-TP-Bus von Eingangs-/Ausgangsmodulen nach einem der vorangehenden Ansprüche, **dadurch gekennzeichnet, dass** die Spannungsüberwachungsstufe FP7 des Busses Überwachungsmittel der Spannung des Busses VIN aufweist, wobei in Richtung eines Microcontrollers µC ein binäres Ausgangssignal erzeugt wird, das anzeigt, wenn die Spannung VIN unter einer vorbestimmten Schwelle liegt.

**14.** Verbindungsvorrichtung an einen EIB- oder KNX-TP-Bus von Eingangs-/Ausgangsmodulen nach einem der vorangehenden Ansprüche, **dadurch gekennzeichnet, dass** eine Spannungsüberwachungsstufe FP9 am Ausgang der Anpassungsstufe der dynamischen Impedanz FP2 verbunden ist, wobei ein binäres Signal an die Adresse der Hochleistungsversorgung FP3 gesendet wird, um sie zu trennen, wenn die Spannung Vast am Ausgang der Anpassungsstufe der dynamischen Impedanz FP2 zu schwach ist.

**15.** Verbindungsvorrichtung an einen EIB- oder KNX-TP-Bus von Eingangs-/Ausgangsmodulen nach vorangehendem Anspruch, **dadurch gekennzeichnet, dass** die Überwachungsstufen der Spannung des Busses FP7 oder der Spannung FP9 am Ausgang der Anpassungsstufe der dynamischen Impedanz FP2 am Eingang einen bipolaren Transistor vom Typ PNP (Q3A, Q4A) aufweisen, dessen Basis an die Spannung (VIN, Vast) angeschlossen ist, die ihn über eine Widerstandsbrücke polarisiert und dessen Sender die Basis eines Transistors vom Typ NPN (Q5A, Q5B) steuert, die von einem Widerstand (R14, R14') polarisiert ist, wobei das binäre Signal auf Ebene des Sammlers desselben entnommen wird, der mit einer über einen Widerstand (R17, R17') vorbestimmten Gleichspannung verbunden ist, der das Spannungsniveau des Signals im hohen Zustand festlegt.

**16.** Verbindungsvorrichtung an einen EIB- oder KNX-TP-Bus von Eingangs-/Ausgangsmodulen nach vorangehendem Anspruch, **dadurch gekennzeichnet, dass** ein zweiter Transistor (Q3B, Q4B), der mit dem Eingangstransistor identisch ist, mit diesem in Differentialmontage montiert ist, um einen Temperaturausgleich der Spannungen Basis/Sender der Transistoren (Q3A, Q3B; Q4A, Q4B) herzustellen.

**17.** Verbindungsvorrichtung an einen EIB- oder KNX-TP-Bus von Eingangs-/Ausgangsmodulen nach vorangehendem Anspruch, **dadurch gekennzeichnet, dass** eine zwischen der vorbestimmten Gleichspannung und der Masse verbundene Widerstandsbrücke (R8, R9) die Basis der zweiten Transistoren (Q3B, Q4B) versorgt, die die Differentialmontage der zwei jeweiligen Überwachungsstufen (FP7, FP9) der Busspannung und der Spannung am Ausgang der Anpassungsstufe der dynamischen Impedanz FP2 bildet, um ein Spannungsbezugssystem zu bilden.

**18.** Verbindungsvorrichtung an einen EIB- oder KNX-TP-Bus von Eingangs-/Ausgangsmodulen nach einem der vorangehenden Ansprüche, **dadurch gekennzeichnet, dass** ein Signal SAVE imminenter Unterbrechung der Spannung über einen Widerstand RC an die vorbestimmte Gleichspannung angeschlossen ist, die am Ausgang der Umschaltstufe FP4 erscheint, und mit einem Microcontroller µC verbunden ist.

**19.** Verbindungsvorrichtung an einen EIB- oder KNX-TP-Bus von Eingangs-/Ausgangsmodulen nach einem der vorangehenden Ansprüche, **dadurch gekennzeichnet, dass** eine Erzeugungsstufe eines nicht maskierbaren Unterbrechungssignals FP8 in Richtung des Microcontrollers am Ausgang der Empfangsstufe FP6 platziert ist.

**20.** Verbindungsvorrichtung an einen EIB- oder KNX-TP-Bus von Eingangs-/Ausgangsmodulen nach vorangehendem Anspruch, **dadurch gekennzeichnet, dass** die Erzeugungsstufe eines nicht maskierbaren Unterbrechungssignals FP8 am Eingang eines bipolaren Transistors Q9 vom Typ NPN gebildet wird, dessen Basis mit dem Ausgang der Empfangsstufe FP6 verbunden ist, und dessen Sender über eine Widerstandsbrücke (R101, R102) die Basis eines zweiten Transistors NPN Q6 steuert, dessen Sammler den Ausgang bildet, der das nicht maskierbare binäre Unterbrechungssignal NMI erzeugt.

**21.** Verbindungsvorrichtung an einen EIB- oder KNX-TP-Bus von Eingangs-/Ausgangsmodulen nach vorangehendem Anspruch, **dadurch gekennzeichnet, dass** eine Kapazität C100 parallel mit dem Widerstand R101 verbunden ist, der zwischen jeweils dem Sender und der Basis jedes der zwei bipolaren Transistoren (Q9, Q6) platziert ist.

**22.** Verbindungsvorrichtung an einen EIB- oder KNX-TP-Bus von Eingangs-/Ausgangsmodulen nach einem der Ansprüche 20 und 21, **dadurch gekennzeichnet, dass** eine Kapazität C101 den Ausgang über Sammler der Erzeugungsstufe eines nicht maskierbaren Unterbrechungssignals FP8 entkoppelt, wodurch sich das Ausgangssignal während der Füllung verzögert.

**23.** Verbindungsvorrichtung an einen EIB- oder KNX-TP-Bus von Eingangs-/Ausgangsmodulen nach einem der vorangehenden Ansprüche, **dadurch gekennzeichnet, dass** die Empfangsstufe FP6 auf einem operativen Verstärker IC6 basiert, der als Vergleicher verwendet wird, der als offener Sammler mit einem Widerstand R7 arbeitet, der zwischen dem Ausgang des Verstärkers und an die Hochleistungsversorgung angeschlossen ist, dessen nicht umkehrbarer Eingang über eine erste Teilerbrücke (R3+R4, R5) mit der Versorgungsspannung verbunden ist und umkehrbarer Eingang über eine zweite Teilerbrücke (R1, R2) und einen Tiefpassfilter an die Busspannung VIN angeschlossen ist, wobei eine Kapazität C3 eine dynamische Masse bildet, die einerseits nach R2 und vor R4 und andererseits mit der Masse verbunden ist, wobei R4 die Nachweisschwelle definiert und mit einem Gegenreaktions-Widerstand R6, der zwischen dem Ausgang des operativen Verstärkers und dem nicht umkehrbaren Eingang verbunden ist, ebenfalls die Hysterese, die vom Verhältnis R4/R6 gebildet wird.

24. Verbindungsvorrichtung an einen EIB- oder KNX-TP-Bus von Eingangs-/Ausgangsmodulen nach vorangehendem Anspruch, **dadurch gekennzeichnet, dass** der Tiefpassfilter von einer Kapazität C2 gebildet wird, die zwischen R1 und der Masse geschaltet ist.

25. Verbindungsvorrichtung an einen EIB- oder KNX-TP-Bus von Eingangs-/Ausgangsmodulen nach Anspruch 23, **dadurch gekennzeichnet, dass** der Tiefpassfilter aus einem aktiven Filter besteht, der aus einen Kreis besteht, der einer Sallen Key Struktur gehorcht, die nach der Teilerbrücke (R1, R2) geschaltet ist und einen Folgetransistor T31 aufweist.

Vbus

Partie
d'égalisation

Partie
active

= 0

Vbus

= 1

tension du bus

signal

| 1 | 1 | 1 | 0 | 0 | 0 | 0 | 1 | 0 | 0 |

Figure 1

**Figure 2**

**Figure 3**

Figure 4

Figure 5

Figure 6

**Figure 7**

Figure 8

Figure 9

Figure 10